# EUROPÄISCHE PATENTSCHRIFT

(11) **EP 0 931 239 B1**
(45) Veröffentlichungstag und Bekanntmachung des Hinweises auf die Patenterteilung: **15.01.2003**
(21) Anmeldenummer: 98946248.6
(22) Anmeldetag: 27.07.1998
(51) Int. Cl.: F28F 25/08, B01J 19/32

(54) **EINBAUPACKUNG ZUM STOFF- UND/ODER WÄRMEAUSTAUSCH ZWISCHEN GASEN UND FLÜSSIGKEITEN**
BUILT-IN PACKING FOR SUBSTANCE AND/OR HEAT EXCHANGE BETWEEN GASES AND LIQUIDS
EMBALLAGE INTEGRE POUR ECHANGE DE SUBSTANCES ET/OU DE CHALEUR ENTRE DES GAZ ET DES LIQUIDES

(30) Priorität: 01.08.1997 DE 19733480
(43) Veröffentlichungstag der Anmeldung: 28.07.1999
(73) Patentinhaber: GEA Energietecknik GmbH, 44809 Bochum (DE)
(72) Erfinder: VODICKA, Vladimir, D-44801 Bochum (DE); KATZMANN, Arno, D-45529 Hattingen (DE)
(74) Vertreter: Bockermann, Rolf, Dipl.-Ing.
(86) Internationale Anmeldenummer: DE9802176
(87) Internationale Veröffentlichungsnummer: WO99006784

(56) Entgegenhaltungen:
- EP-A- 0 341 232
- EP-A- 0 745 825
- EP-A- 0 825 407
- DE-A- 2 032 292
- US-A- 4 562 015

## Beschreibung

Eine derartige Einbaupackung wird mit mehreren weiteren Einbaupackungen so z.B. in einem Naßkühlturm angeordnet, daß einerseits zu kühlendes Wasser von oben nach unten und andererseits Kühlluft im Quer- und/oder Gegenstrom durch die Einbaupackungen treten kann.

In diesem Zusammenhang sind aus gewellten platten- oder folienartigen Einbauelementen zusammengesetzte diverse Einbaupackungen bekannt, die in der DE-PS 23 22 683 erläutert werden. Alle diese Einbauelemente weisen geschlossene Flächen auf, an denen das zu kühlende Wasser in dünnen Schichten herabfließt. Zur Unterbrechung einer Strom- oder Fadenbildungstendenz ist es in diesem Zusammenhang auch bekannt, Löcher oder Vorsprünge vorzusehen, die in bzw. auf den Flächen oder auch in den Eckbereichen der Wellungen angeordnet sein können.

Unabhängig davon, wie nun die durch die Wellungen gebildeten Kanäle verlaufen, horizontal, vertikal oder schräg, stehen jedoch stets im Prinzip geschlossene Wasserschichten im wärmeaustauschenden Kontakt mit der Kühlluft. Die Wärmeaustauschleistung wird hierdurch zwangsläufig begrenzt.

Eine weitere Eigenschaft der bekannten Bauarten besteht darin, daß sie empfindlich gegen Schmutz sind. Eine Reinigung der Einbauelemente im montierten Zustand ist kaum möglich.

Darüberhinaus sind im Umfang der DE 41 11 451 C2 Rieseleinbauelemente in Form von rohrförmigen Körpern bekannt geworden, die zu paketartigen Elementen zusammengefaßt werden. Die rohrförmigen Körper sind mit einer der Elementhöhe bzw. der Elementbreite entsprechenden Länge von einem kontinuierlich hergestellten, durch sich kreuzende Stränge gebildeten rohrförmigen Gitterkörper abgetrennt, wobei die einander berührenden Gitterkörper mindestens an ihren Stirnflächen miteinander fest verbunden sind.

Auch bei diesen Rieseleinbauelementen leiten die wendelförmigen Stränge das an ihnen herabfließende Wasser. Die einzelnen Knotenpunkte der Stränge sollen eine ständige Aufteilung und Zusammenführung der einzelnen entlang fließenden Wassersträhnen bewirken.

Einbaupackungen gemäß der Präambel des Anspruchs 1 sind aus den Dokumenten US-A-4 562 015 und DE-A-2 032 292 bekannt.

Der Erfindung liegt ausgehend vom Stand der Technik die Aufgabe zugrunde, eine Einbaupackung zum Stoff- und/oder Wärmeaustausch zwischen Gasen und Flüssigkeiten zu schaffen, die bei einer hohen Wärmeaustauschleistung unempfindlich gegen Schmutz ist sowie leicht hergestellt und montiert werden kann.

Die Lösung dieser Aufgabe besteht nach der Erfindung in den Merkmalen des Anspruchs 1.

Kernpunkt der Erfindung ist die Ausbildung von identischen gitterartigen Einbauelementen in filigraner Konfiguration. Durch die im Winkel zur Vertikalen verlaufenden, durch die Wellungen gebildeten Kanäle mit großflächigen Durchbrechungen, welche bei zwei benachbarten, jedoch um 180° um eine vertikale Achse verdreht einander zugeordneten Einbauelementen sich kreuzen, sind im Prinzip keine Flächen mehr vorhanden, an denen, z.B. in einem Naßkühlturm, zu kühlendes Wasser in Schichten oder Strähnen entlang fließen kann. Vielmehr wird durch die filigrane Gestaltung der Einbäuelemente und das dadurch gebildete Gitterwerk einer Einbaupackung jeder aus der Wasserverteilung herabfallende Wassertropfen im Bereich der oberen Randstreifen bei seinem Aufprall auf die Randstreifen, auf die Längsstreben und die Querstege in viele kleine Wassertröpfchen gespalten, die dann wiederum gegeneinander sowie gegen die Längsstreben und die Querstege geschleudert und dadurch so weit in ihrem Volumen verringert werden, daß sich in der Einbaupackung ein quasi nebelartiges Fluidbett bildet, das von der Kühlluft getragen wird. Auf diese Art und Weise wird eine sehr große Wärmeaustauschfläche geschaffen, welche dann auch zu einer hohen Wärmeaustauschleistung führt.

Der filigrane Aufbau der Einbauelemente ist mit dem weiteren Vorteil verbunden, daß die hieraus zusammengesetzte Einbaupackung unempfindlich gegen Schmutz ist und außerdem selbst im montierten Zustand mit Hochdruckwasserstrahlen gereinigt werden kann. Hierbei gewährleisten die sich im Tiefsten der Kanäle erstreckenden und jeweils mit den Längsstreben der benachbarten Einbauelemente in Anlagekontakt gelangenden Längsstreben zusammen mit den endseitige Bestandteile der beiden Randstreifen bildenden Anlageplättchen und den Querstegen die notwendige Steifigkeit. Über die Anlageplättchen sind zwei benachbarte Einbauelemente auch miteinander verbunden.

Die Kanäle der Einbauelemente können sich entsprechend den Merkmalen des Anspruchs 2 unter einem Winkel von 10° bis 80° zur Vertikalen erstrecken. Unter fertigungstechnischen Gesichtspunkten ist es jedoch von Vorteil, wenn die Kanäle unter einem Winkel von 30° zur Vertikalen verlaufen.

Mit den Merkmalen des Anspruchs 3 wird die Steifigkeit jedes Einbauelements sowie die insbesondere in einem Naßkühlturm angestrebte nebelartige Turbulenz herabrieselnden Wassers im Sinne der Erzielung einer großen Wärmeaustauschfläche weiter verbessert. Durch die Diagonalstege werden mithin zwischen zwei übereinander liegenden Knotenpunkten zweier benachbarter Längsstreben und Querstege weitere kreuzartige Verstrebungen geschaffen. Diese durch die Diagonalstege gebildeten Verstrebungen bilden dann zusammen mit den Querstegen gewissermaßen die filigranen Wände der Kanäle zwischen den Längsstreben.

Die Konfiguration der Quer- und Diagonalstege entsprechend den Merkmalen des Anspruchs 4 trägt zu einer Erhöhung der Steifigkeit jedes Einbauelements bei, ohne indessen die filigrane Ausbildung zu beeinträchtigen. Außerdem dient sie der Fertigungserleichterung, insbesondere beim Spritzgießen der Einbauelemente.

Die Längsstreben, die Querstege sowie die Diagonalstege können einen runden Querschnitt besitzen.

Hinsichtlich der Längsstreben ist es jedoch gemäß Anspruch 5 von Vorteil, wenn diese einen rechteckigen Querschnitt aufweisen. Die größere Querschnittslänge verläuft dann quer zur Längsrichtung der Längsstreben.

Nach Anspruch 6 besitzen die Querstege vorteilhafterweise einen quadratischen Querschnitt. Sie sind auch dünner als die Längsstreben gestaltet.

Bezüglich der Diagonalstege ist es entsprechend Anspruch 7 besonders zweckmäßig, wenn diese einen keilförmigen Querschnitt haben. Dies kommt ebenfalls der Fertigung der Einbauelemente im Spritzgußverfahren entgegen.

Die der Verbindung von zwei benachbarten Einbauelementen dienenden Anlageplättchen in den oberen und unteren Randstreifen eines Einbauelements weisen gemäß Anspruch 8 eine rechteckige Konfiguration auf, wobei sich ihre Längsachsen in der Vertikalen erstrecken. Eine derartige Anordnung führt dazu, daß die frontalen Flächen der Anlageplättchen als Kontaktbereich zweier Einbauelemente genutzt werden können.

Die Anlageplättchen sind gemäß Anspruch 9 nicht nur mit den Längsstreben verbunden, sondern über horizontale Verbindungsstege auch untereinander. Diese Verbindungsstege erstrecken sich bevorzugt im Bereich der oberen bzw. unteren Querkanten der Anlageplättchen. Auf diese Weise werden die Oberkante des oberen Randstreifens und die Unterkante des unteren Randstreifens durch die freien Querkanten der Anlageplättchen sowie die freien Stirnkanten der Verbindungsstege gebildet.

Eine weitere Aussteifung der Randstreifen wird mit den Merkmalen des Anspruchs 10 erzielt. Außerdem trägt diese Ausgestaltung mit dazu bei, daß die sich vertikal erstreckenden Bereiche der Randstreifen mit den Bereichen der Kanäle gespritzt werden können.

Damit auch im mittleren Höhenbereich der Einbauelemente zusätzliche Verbindungsbereiche zwischen zwei benachbarten Einbauelementen geschaffen werden, sind entsprechend Anspruch 11 die im mittleren Höhenbereich liegenden Knotenpunkte der Längsstreben mit den Querstegen und gegebenenfalls auch mit den Diagonalstegen zu Abstützflächen vergrößert.

Da die Einbauelemente in bevorzugter Ausführungsform aus Kunststoff bestehen, sind nach Anspruch 12 zwei einander benachbarte Einbauelemente über die Anlageplättchen miteinander verschweißt. Auch die Abstützflächen werden hierbei bevorzugt miteinander verschweißt.

Eine weitere Ausführungsform der Verbindung zweier Einbauelemente wird in den Merkmalen des Anspruchs 13 erblickt. Danach sind zwei einander benachbarte Einbauelemente über die Anlageplättchen miteinander verzapft. Zu diesem Zweck können die in den Randstreifen aufeinander folgenden Anlageplättchen einmal mit einem Zapfen und einmal mit einer daran angepaßten Rastausnehmung versehen sein. Eine entsprechende Ausgestaltung können in diesem Zusammenhang auch die Abstützflächen im mittleren Höhenbereich der Einbauelemente erhalten.

Damit die Einbauelemente sinnvoll im Spritzgußverfahren als Massenartikel hergestellt werden können, ist es gemäß Anspruch 14 vorgesehen, daß die Einbauelemente aus Polyethylen (PE), insbesondere High Density Polyethylen (HDPE), bestehen.

Entsprechend den Merkmalen des Anspruchs 15 können die Einbauelemente aber auch aus Polypropylen gebildet sein.

Die Erfindung ist nachfolgend anhand von in den Zeichnungen dargestellten Ausführungsbeispielen näher erläutert.
Es zeigen:
- Figur 1: in der schematischen Perspektive einen Ausschnitt einer Einbaupackung für einen Naßkühlturm;
- Figur 2: in vergrößerter Darstellung im Schema eine Frontalansicht auf ein Einbauelement der Einbaupackung gemäß Figur 1;
- Figur 3: in nochmals vergrößerter Darstellung den Ausschnitt III der Figur 2;
- Figur 4: in ebenfalls vergrößerter Darstellung den Ausschnitt IV der Figur 2;
- Figur 5: in vergrößerter Explosionsdarstellung Ausschnitte von zwei nebeneinander angeordneten Einbauelementen;
- Figur 6: in vergrößertem Maßstab eine ausschnittsweise Draufsicht auf die Darstellung der Figur 2 gemäß dem Pfeil VI und
- Figur 7: ebenfalls in vergrößertem Maßstab eine ausschnittsweise Draufsicht auf die Darstellung der Figur 2 gemäß einer weiteren Ausführungsform.

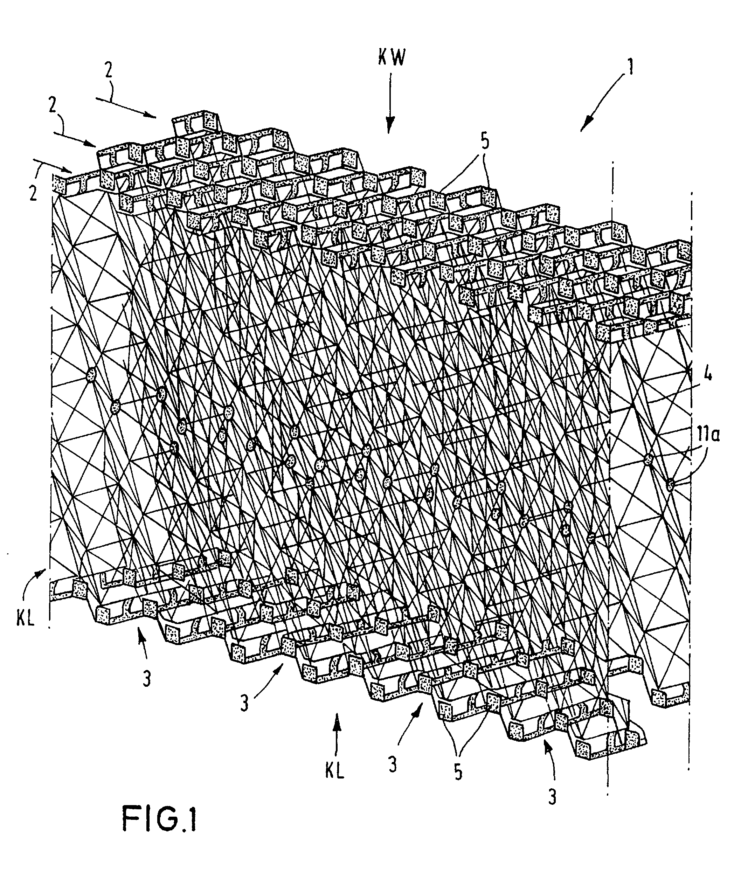

Mit 1 ist in der Figur 1 eine Einbaupackung für einen ansonsten nicht näher dargestellten Naßkühlturm bezeichnet. Diese Einbaupackung 1 besteht aus mehreren nebeneinander angeordneten gewellten gitterartigen Einbauelementen 2 aus einem gespritzen High-Density-Polyethylen (HDPE).

Die Einbaupackung 1 wird derart in Mehrfachanordnung in einen Naßkühlturm integriert, daß gemäß dem Pfeil KW von oben zu kühlendes Wasser und gemäß den Pfeilen KL Kühlluft im Gegenstrom oder Querstrom durch die Anordnung treten kann.

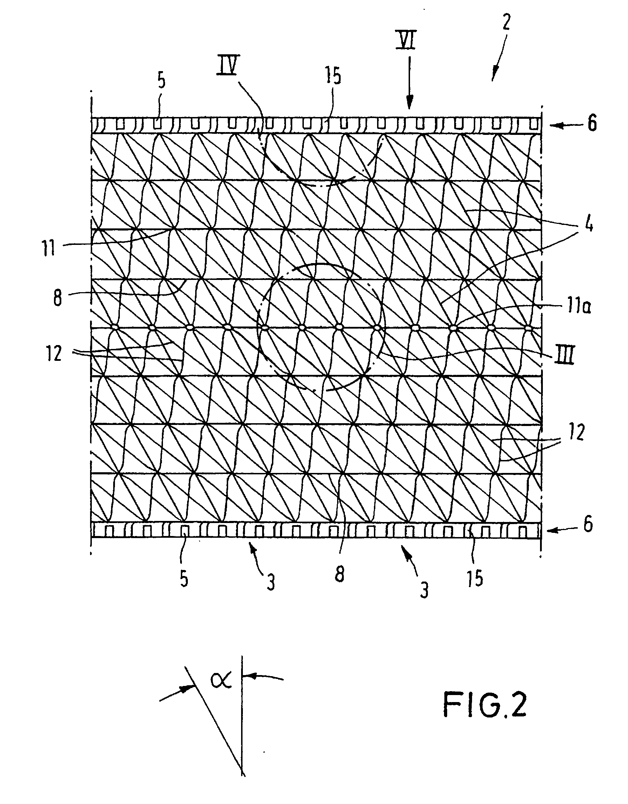

Die eine Einbaupackung 1 bildenden Einbauelemente 2 sind identisch aufgebaut. Wie in diesem Zusammenhang insbesondere die Figuren 2 bis 5 erkennen lassen, sind durch die Wellungen Kanäle 3 gebildet, die sich unter einem Winkel α von 30° zur Vertikalen (Figur 2) geradlinig und parallel zueinander erstrecken. Entlang dertiefsten Stelle jedes Kanals 3 verläuft eine durchgehende Längsstrebe 4 mit einem rechteckigen Querschnitt. Die längere Querschnittsachse erstreckt sich quer zu den Kanälen 3. Die Enden der Längsstreben 4 münden in rechteckige Anlageplättchen 5, deren Längsachsen sich vertikal erstrecken. Die Anlageplättchen 5 bilden Bestandteile von oberen und unteren geschlossenen Randstreifen 6. Dazu sind zwei benachbarte Anlageplättchen 5 durch Verbindungsstege 7 aneinandergefügt. Diese Verbindungsstege 7 erstrecken sich entlang der oberen und unteren Querkanten der Anlageplättchen 5, so daß die Stirnseiten der Anlageplättchen 5 in denselben Horizontalebenen verlaufen wie die Stirnseiten der Verbindungsstege 7 (Figuren 2, 4 und 6).

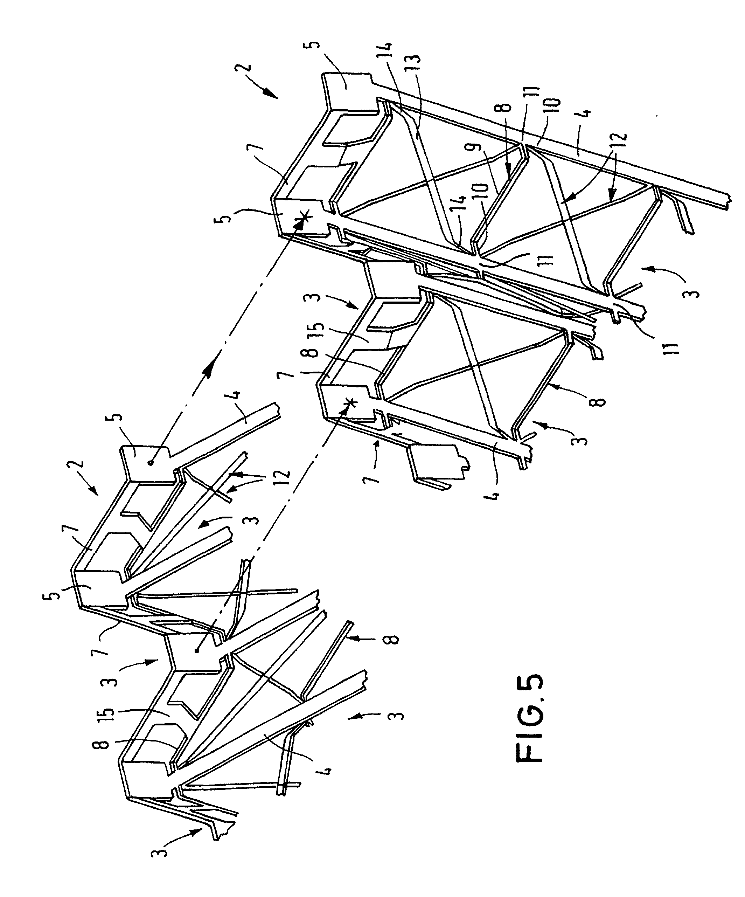

Die Längsstreben 4 sind durch Querstege 8 mit quadratischem Querschnitt miteinander verbunden. Die Querstege 8 erstrecken sich in parallel zu den beiden Randstreifen 6 verlaufenden Horizontalebenen. Sie besitzen in ihrer Längserstreckung einen zick-zack-förmigen Verlauf mit einem längeren Mittelschenkel 9 und zwei demgegenüber kürzeren Endschenkeln 10 (Figur 5). Die Endschenkel 10 liegen in den Vertikalebenen, in denen sich auch die Längsstreben 4 erstrecken.

Durch das Zusammentreffen der Längsstreben 4 mit den Querstegen 8 werden Knotenpunkte 11 gebildet. Jeder Knotenpunkt 11 einer Längsstrebe 4 mit einem Quersteg 8 ist außerdem durch Diagonalstege 12 mit den Knotenpunkten 11 einer benachbarten Längsstrebe 4 mit den in den benachbarten Horizontalebenen verlaufenden Querstegen 8 verbunden. Auf diese Weise werden kreuzförmige Versteifungen zwischen zwei einander benachbarten Längsstreben 4 und zwei benachbarten Querstegen 8 gebildet. Auch die Diagonalstege 12 weisen in ihren Längserstreckungen einen zick-zack-förmigen Verlauf mit jeweils einem längeren Mittelschenkel 13 und zwei demgegenüber kürzeren Endschenkeln 14 auf (Figur 5). Die Endschenkel 14 liegen ebenfalls in den Vertikalebenen der Längsstreben 4. Die Diagonalstege 12 besitzen einen keilförmigen Querschnitt.

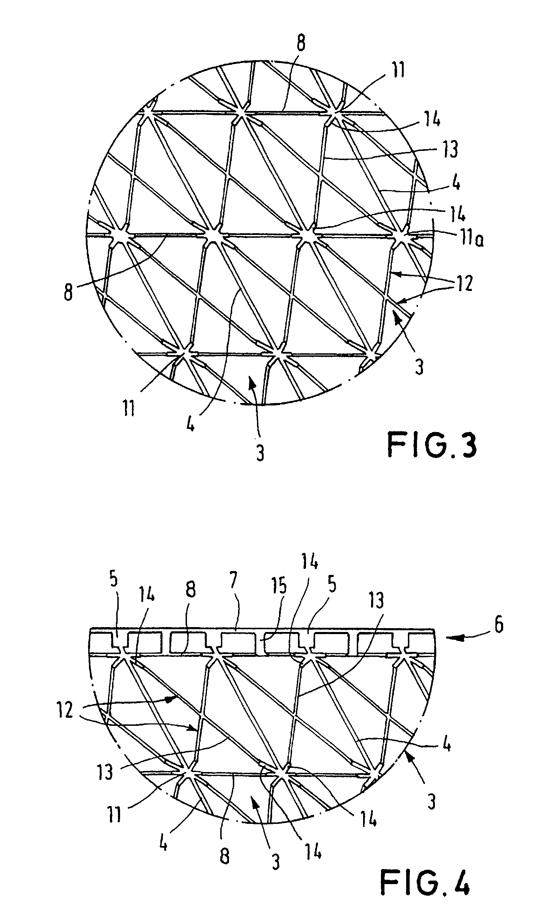

Insbesondere die Figuren 4 und 5 lassen noch erkennen, daß die Verbindungsstege 7 zwischen den Anlageplättchen 5 über eishockeyschlägerähnliche Vertikalstege 15 mit den in den benachbarten Horizontalebenen liegenden Querstegen 8 verbunden sind.

Die Figuren 2 und 3 zeigen, daß die im mittleren Höhenbereich eines Einbauelements 2 liegenden Knotenpunkte 11a der Längsstreben 4 mit den Querstegen 8 und den Diagonalstegen 12 zu Abstützflächen vergrößert sind. Über diese Knotenpunkte 11a sowie die Stützflächen der Anlageplättchen 5 werden gemäß der Ausführungsform der Figuren 1, 5 und 6 jeweils zwei benachbarte Einbauelemente 2 miteinander verschweißt. Dazu wird eines der Einbauelemente 2 um eine vertikale Achse um 180° verdreht angeordnet (Figuren 1 und 5), so daß sich bei einem Kontakt der Anlageplättchen 5 und der Knotenpunkte 11a dann die Längsstreben 4 kreuzen.

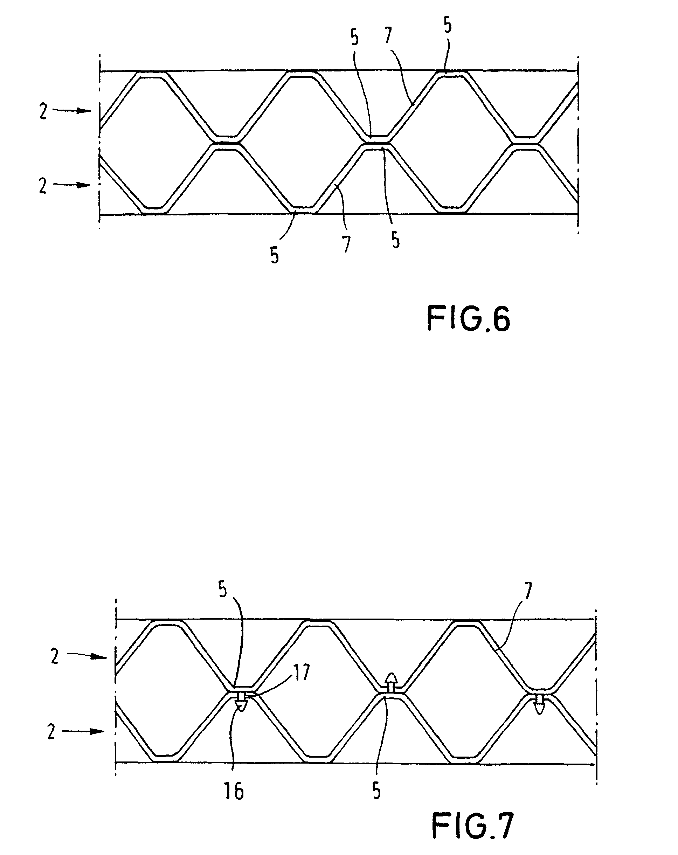

Statt zwei benachbarte Einbauelemente 2 über die Anlageplättchen 5 und die Knotenpunkte 11a zu verschweißen, ist es entsprechend der Ausführungsform der Figur 7 auch möglich, die beiden Einbauelemente 2 miteinander zu verzapfen. Dazu sind sowohl an den Anlageplättchen 5 als auch an den Knotenpunkten 11a abwechselnd Zapfen 16 und daran angepaßte Ausnehmungen 17 vorgesehen, so daß die Einbauelemente 2 einfach zusammengesteckt werden können und auf diese Weise eine Einbaupackung 1 bilden.

### Bezugszeichenaufstellung

- 1 -: Einbaupackung
- 2 -: Einbauelemente f. 1
- 3 -: Kanäle in 2
- 4 -: Längsstreben v. 2
- 5 -: Anlageplättchen
- 6 -: Randstreifen
- 7 -: Verbindungsstege
- 8 -: Querstege
- 9 -: Mittelschenkel v. 8
- 10 -: Endschenkel v. 8
- 11 -: Knotenpunkte
11a - Knotenpunkte
- 12 -: Diagonalstege
- 13 -: Mittelschenkel v. 12
- 14 -: Endschenkel v. 12
- 15 -: Vertikalstege
- 16 -: Zapfen
- 17 -: Ausnehmungen

- α -: Neigungswinkel v. 3
- KL -: Kühlluft
- KW -: zu kühlendes Wasser

## Patentansprüche

1. Einbaupackung zum Stoff- und/oder Wärmeaustausch zwischen Gasen und Flüssigkeiten, welche aus mehreren nebeneinander angeordneten gewellten gitterartigen Einbauelementen (2) zusammengesetzt ist, bei denen die sich unter einem Winkel (α) zur Vertikalen geradlinig und parallel zueinander erstreckenden, durch die Wellungen gebildeten Kanäle (3) von jeweils zwei benachbarten Einbauelementen (2) sich kreuzen, **dadurch gekennzeichnet, daß** entlang dertiefsten Stelle der Kanäle (3) durchgehende Längsstreben (4) vorgesehen sind, die in endseitige Anlageplättchen (5) münden, welche Bestandteile eines oberen und eines unteren horizontalen geschlossenen Randstreifens (6) bilden, und daß die Längsstreben (4) mit in parallel zu beiden Randstreifen (6) verlaufenden Horizontalebenen sich erstreckenden Querstegen (8) knotenpunktartig verbunden sind.

2. Einbaupackung nach Anspruch 1, **dadurch gekennzeichnet, daß** die Kanäle (3) unter einem Winkel (α) von 10° bis 80°, bevorzugt 30°, zur Vertikalen verlaufen.

3. Einbaupackung nach Anspruch 1 oder 2, **dadurch gekennzeichnet, daß** jeder Knotenpunkt (11, 11a) einer Längsstrebe (4) mit einem Quersteg (8) durch Diagonalstege (12) mit den Knotenpunkten (11, 11a) einer benachbarten Längsstrebe (4) mit den in den benachbarten Horizontalebenen verlaufenden Querstegen (8) verbunden ist.

4. Einbaupackung nach Anspruch 3, **dadurch gekennzeichnet, daß** die Querstege (8) und die Diagonalstege (12) in ihren Längserstreckungen einen zick-zack-förmigen Verlauf mit jeweils einem längeren Mittelschenkel (9, 13) und zwei demgegenüber kürzeren Endschenkeln (10, 14) besitzen, wobei die Endschenkel (10, 14) in den Vertikalebenen liegen, in denen sich auch die Längsstreben (4) jedes Einbauelements (2) erstrecken.

5. Einbaupackung nach einem der Ansprüche 1 bis 4, **dadurch gekennzeichnet, daß** die Längsstreben (4) einen rechteckigen Querschnitt aufweisen.

6. Einbaupackung nach einem der Ansprüche 1 bis 5, **dadurch gekennzeichnet, daß** die Querstege (8) einen quadratischen Querschnitt besitzen.

7. Einbaupackung nach einem der Ansprüche 3 bis 6, **dadurch gekennzeichnet, daß** die Diagonalstege (12) einen keilförmigen Querschnitt haben.

8. Einbaupackung nach einem der Ansprüche 1 bis 7,
**dadurch gekennzeichnet, daß** die Anlageplättchen (5) eine rechteckige Konfiguration aufweisen, wobei sich ihre Längsachsen in der Vertikalen erstrecken.

9. Einbaupackung nach einem der Ansprüche 1 bis 8, **dadurch gekennzeichnet, daß** die Bestandteile eines Randstreifens (6) bildenden Anlageplättchen (5) durch horizontale Verbindungsstege (7) aneinander gefügt sind.

10. Einbaupackung nach Anspruch 9, **dadurch gekennzeichnet, daß** die Verbindungsstege (7) über eishockeyschlägerähnliche Vertikalstege (15) mit den in den benachbarten Horizontalebenen liegenden Querstegen (8) verbunden sind.

11. Einbaupackung nach einem der Ansprüche 1 bis 10, **dadurch gekennzeichnet, daß** mindestens die im mittleren Höhenbereich der Einbauelemente (2) liegenden Knotenpunkte (11a) der Längsstreben (4) mit den Querstegen (8) zu Abstützflächen vergrößert sind.

12. Einbaupackung nach einem der Ansprüche 1 bis 11, **dadurch gekennzeichnet, daß** zwei einander benachbarte Einbauelemente (2) über die Anlageplättchen (5) miteinander verschweißt sind.

13. Einbaupackung nach einem der Ansprüche 1 bis 11, **dadurch gekennzeichnet, daß** zwei einander benachbarte Einbauelemente (2) über die Anlageplättchen (5) miteinander verzapft sind.

14. Einbaupackung nach einem der Ansprüche 1 bis 13, **dadurch gekennzeichnet, daß** die Einbauelemente (2) aus Polyethylen, insbesondere High density Polyethylen, bestehen.

15. Einbaupackung nach einem der Ansprüche 1 bis 13, **dadurch gekennzeichnet, daß** die Einbauelemente (2) aus Polypropylen bestehen.

## Claims

1. A built-in packing for mass transfer and/or heat exchange between gases and liquids, said packing being made up of a plurality of corrugated grid-like packing elements (2) which are disposed side by side and wherein the channels (3) of each two adjacent packing elements (2) formed by the corrugations (3) and extending at an angle (α) to the vertical rectilinearly and in parallel relationship cross one another, **characterised in that** continuous longitudinal struts (4) are provided along the deepest point of the channels (3) and lead into end-face abutment plates (5) which form parts of a top and a bottom horizontal closed edge strip (6), and **in that** the longitudinal struts (4) are connected in the form of junctions to transverse webs (8) which extend in horizontal planes extending in parallel relationship to the two edge strips (6).

2. A packing according to claim 1, **characterised in that** the channels (3) extend to the vertical at an angle (α) of 10° to 80°, preferably 30°.

3. A packing according to claim 1 or 2, **characterised in that** each junction (11, 11a) of the longitudinal struts (4) and a transverse web (8) is connected by diagonal webs (12) to the junctions (11, 11a) of an adjacent longitudinal strut (4) and the transverse webs (8) extending in the adjacent horizontal planes.

4. A packing according to claim 3, **characterised in that** the transverse webs (8) and the diagonal webs (12) have, in their longitudinal extents, a zig-zag shaped configuration each having a longer middle limb (9, 13) and two end limbs (10, 11) shorter than said middle limb, the end limbs (10, 14) lying in the vertical planes in which the longitudinal webs (4) of each packing element (2) also extend.

5. A packing according to any one of claims 1 to 4, **characterised in that** the longitudinal struts (4) have a rectangular cross-section.

6. A packing according to any one of claims 1 to 5, **characterised in that** the transverse webs (8) have a square cross-section.

7. A packing according to any one of claims 3 to 6, **characterised in that** the diagonal webs (12) have a wedged-shaped cross-section.

8. A packing according to any one of claims 1 to 7, **characterised in that** the abutment plates (5) have a rectangular configuration, their longitudinal axes extending in the vertical.

9. A packing according to any one of claims 1 to 8, **characterised in that** the abutment plates (5) forming parts of an edge strip (6) are joined together by horizontal connecting webs (7).

10. A packing according to claim 9, **characterised in that** the connecting webs (7) are connected, by way of vertical webs (15) similar to ice hockey sticks, to the transverse webs (8) situated in the adjacent horizontal planes.

11. A packing according to any one of claims 1 to 10, **characterised in that** at least the junctions (11a) of the longitudinal struts (4) and the transverse webs (8) situated in the mid-height zone of the packing elements (2) are enlarged to form support surfaces.

12. A packing according to any one of claims 1 to 11, **characterised in that** two adjacent packing elements (2) are welded together via the abutment plates (5).

13. A packing according to any one of claims 1 to 11, **characterised in that** two adjacent packing elements (2) are pinned together via the abutment plates (5).

14. A packing according to any one of claims 1 to 13, **characterised in that** packing elements (2) consist of polyethylene, particularly high density polyethylene.

15. A packing according to any one of claims 1 to 13, **characterised in that** the packing elements (2) consist of polypropylene.

## Revendications

1. Ensemble encastrable pour l'échange de substances et/ou de chaleur entre des gaz et des liquides qui est composé de plusieurs éléments encastrables (2) en forme de grille, ondulés, placés l'un à côté de l'autre, pour lesquels les canaux (3) d'à chaque fois deux éléments encastrables (2) voisins, formés par les ondulations, s'étendant parallèlement l'un à l'autre en ligne droite selon un angle (α) par rapport à la verticale se croisent, **caractérisé en ce que** le long du point le plus profond des canaux (3) on prévoit des étais longitudinaux (4) qui débouchent dans des plaquettes de contact (5) placées du côté terminal qui forment les parties constitutives d'une bande de bord (6) supérieure et d'une bande de bord inférieure horizontale fermée et que les étais longitudinaux (4) sont liés par des points de jonction à des entretoises transversales (8) qui s'étendent dans des plans horizontaux placés parallèlement aux deux bandes de bord (6).

2. Ensemble encastrable selon la revendication 1, **caractérisé en ce que** les canaux (3) s'étendent selon un angle (α) de 10° à 80 , de préférence 30°, par rapport à la verticale.

3. Ensemble encastrable selon la revendication 1 ou 2, **caractérisé en ce que** chaque point de jonction (11, 11a) d'un étai longitudinal (4) est lié aux points de jonction (11, 11a) d'un étai longitudinal (4) voisin avec une entretoise transversale (8) par des entretoises diagonales (12) avec les entretoises transversales (8) qui s'étendent dans les plans horizontaux voisins.

4. Ensemble encastrable selon la revendication 3, **caractérisé en ce que** les entretoises transversales (8) et les entretoises diagonales (12) possèdent dans leurs extensions longitudinales un tracé en zigzag avec à chaque fois un montant médian (9, 13) assez long et deux montants terminaux (10, 14) assez courts en comparaison, les montants terminaux (10, 14) se trouvant dans les plans verticaux dans lesquels s'étendent aussi les étais longitudinaux (4) de chaque élément encastrable (2).

5. Ensemble encastrable selon l'une des revendications 1 à 4, **caractérisé en ce que** les étais longitudinaux (4) présentent une section transversale rectangulaire.

6. Ensemble encastrable selon l'une des revendications 1 à 5, **caractérisé en ce que** les entretoises transversales (8) possèdent une section transversale carrée.

7. Ensemble encastrable selon l'une des revendications 3 à 6, **caractérisé en ce que** les entretoises diagonales (12) ont une section transversale en forme de coin.

8. Ensemble encastrable selon l'une des revendications 1 à 7, **caractérisé en ce que** les plaquettes de contact (5) présentent une configuration rectangulaire, leurs axes longitudinaux s'étendant à la verticale.

9. Ensemble encastrable selon l'une des revendications 1 à 8, **caractérisé en ce que** les plaquettes de contact (5) qui forment des parties constitutives d'une bande de bord (6) sont assemblées par des entretoises de liaison (7) horizontales.

10. Ensemble encastrable selon la revendication 9, **caractérisé en ce que** les entretoises de liaison (7) sont liées aux entretoises transversales (8) placées dans les plans horizontaux voisins par des entretoises verticales (15) en forme de crosse de hockey sur glace.

11. Ensemble encastrable selon l'une des revendications 1 à 10, **caractérisé en ce que** au moins les points de jonction (11a) des étais longitudinaux (4) placés dans la zone médiane des éléments encastrables (2) sont agrandis pour former des surfaces d'appui avec les entretoises transversales (8).

12. Ensemble encastrable selon l'une des revendications 1 à 11, **caractérisé en ce que** deux éléments encastrables (2) voisins l'un de l'autre sont soudés l'un à l'autre par les plaquettes de contact (5).

13. Ensemble encastrable selon l'une des revendications 1 à 11, **caractérisé en ce que** deux éléments encastrables (2) voisins l'un de l'autre sont assemblés l'un à l'autre par tenon et mortaise au moyen des plaquettes de contact (5).

14. Ensemble encastrable selon l'une des revendications 1 à 13, **caractérisé en ce que** les éléments encastrables (2) sont en polyéthylène, en particulier en polyéthylène à haute densité.

15. Ensemble encastrable selon l'une des revendications 1 à 13, **caractérisé en ce que** les éléments encastrables (2) sont en polypropylène.
